# EUROPEAN PATENT APPLICATION

(11) **EP 4 502 828 A1**
(43) Date of publication of application: **05.02.2025**
(21) Application number: 24191356.5
(22) Date of filing: 29.07.2024
(51) Int. Cl.: G06F 18/23, G06V 10/762, G06V 10/77, G06V 10/774

(54) **COMPUTING DEVICE, METHOD AND COMPUTER PROGRAM**

(30) Priority: 02.08.2023 DE 102023120557
(71) Applicant: Karl Storz SE & Co. KG, 78532 Tuttlingen (DE)
(72) Inventor: ALWANNI, Hisham, 78532 Tuttlingen (DE); STERN, Antonia, 78532 Tuttlingen (DE); MÜNDERMANN, Lars, 78532 Tuttlingen (DE)

(57) **Abstract**

The invention provides a computing device (100) and a computer-implemented method for preparing training data. The computing device (100) comprises:
an image embeddings generating module, IEGM (120), configured to receive, as its input, a plurality of images (71) and to generate a data array as an image embedding (72) for each image;
a clustering module, CLUM (130), configured to determine, separately for each of a plurality of clustering parameter values, CPV (1), of a clustering parameter, a respective set of clusters (73) within the plurality of images (71) based on the generated image embeddings (72);
an evaluation module, EVAM (140), configured to construct a trajectory (3, 4, 5) in a parameter space, wherein one dimension of the parameter space represents the plurality of clustering parameter values, CPV (1), and another dimension of the parameter space is based on the number of clusters (73) within the set of clusters (73) determined by the clustering module, CLUM (130), when using a respective clustering parameter value, CPV (1), of the plurality of clustering parameter values, CPV (1);
wherein the evaluation module, EVAM (140) is further configured to determine a measure (AUC) of the parameter space between the origin of the parameter space and the trajectory (3, 4, 5); and
a user interface (160) configured to receive a user input (77) and to indicate changes and/or effects of the user (77) input on/in the measure (AUC).

## Description

### Technical field of the invention

The present invention relates to a computing device configured to provide a user with information and feedback about the properties of a body of images of a medical scene and to a corresponding method. The invention also relates to computing devices and methods for adapting said body of images to improve its properties, for example regarding redundancy. The invention also provides a corresponding computer program product, data storage medium, and data stream.

### Background of the invention

High quality training data are of the essence for the effective and cost-efficient training of machine learning models, such as artificial intelligence entities. While machine learning models are generally intended to facilitate the work of humans and support their efforts, the preparation and curation of high quality training data itself remains a time-consuming task for human personnel.

Moreover, training data are usually offered and sold in large bulks, and it is often the case that their true effectiveness (for example, in reducing time required for training or improving results of the training) is difficult to assess before actually using the training data during the training.

In the field of natural language processing, the technique of word embeddings is known in order to quantify the semantical meaning of texts. A review can be found, for example, in "A Review on Word Embedding Techniques for Text Classification" by S. Birunda and R. Devi, 3.2.2021, DOI: 10.1007/978-981-15-9651-3_23.

### Summary of the invention

The above-described problems are solved by the subject-matter of the independent claims of the present invention.

According to a first aspect, the invention provides a computing device comprising:
an input interface configured to receive a plurality of images of a medical scene;
an image embeddings generating module, IEGM, configured to receive, as its input, the plurality of images and to generate a data array as an image embedding for each image;
a clustering module, CLUM, configured to determine, separately for each of a plurality of clustering parameter values, CPV, of a clustering parameter, a respective set of clusters within the plurality of images based on the generated image embeddings;
an evaluation module, EVAM, configured to construct a trajectory in a parameter space, wherein one dimension of the parameter space represents the plurality of clustering parameter values, CPV, and another dimension of the parameter space is based on the number of clusters within the set of clusters determined by the clustering module, CLUM, when using a respective clustering parameter value, CPV, of the plurality of clustering parameter values, CPV;
wherein the evaluation module, EVAM, is further configured to determine a measure of the parameter space between the origin of the parameter space and the trajectory; and
a user interface configured to receive a user input and to indicate changes and/or effects of the user input on/in the measure.

The data array may in particular be a matrix or a vector. The clustering may be performed using any known clustering algorithm, in particular a threshold-based algorithm, i.e., a clustering algorithm using a clustering threshold, such as a hierarchical agglomerative clustering method. The clustering algorithm may employ a machine-learning model.

The term "medical scene" is used broadly herein: It may refer to a scene in a building dedicated to medical purposes, for example a medical research institute, a hospital, a medical university, the private practice of a physician, the inside of an ambulance, and an outside or even an inside view of a patient that is currently undergoing or is about to go a medical procedure. On the other hand, a medical scene may also be a scene, which has been recorded using a frontend device comprising a camera, wherein the frontend device is a medical instrument such as an endoscope, an exoscope, or the like. The medical scene may also be a scene in which a person with a medical capacity such as a physician or a nurse is present, in particular when acting as such.

The plurality of images received via the input interface may also be designated as "original images", for example to better distinguish them from images of a set of images that has been improved (in particular with respect to its usefulness for the training of machine learning models), which will be sometimes designated as an "adapted set of images".

Advantageously, the clustering module is configured to group the entirety of the plurality of images into clusters. However, in some applications, not all of the images may be grouped into clusters. In other words, there may be images that are not grouped into any cluster, or, equivalently, images that are each grouped into a "cluster of 1". Preferably, however, at least one cluster, preferably a plurality of clusters (and more preferably each cluster) comprises at least two images each.

Although here, in the foregoing and in the following, some functions are described as being performed by modules, it shall be understood that this does not necessarily mean that such modules are provided as entities separate from one another. In cases where one or more modules are provided as software, the modules may be implemented by program code sections or program code snippets, which may be distinct from one another but which, may also be interwoven.

Similarly, in case where one or more modules are provided as hardware, they functions of one or more modules may be provided by one and the same hardware component, or the functions of one module or the functions of several modules may be distributed over several hardware components which need not necessarily correspond to the modules one-to-one. Thus, any apparatus, system, method and so on which exhibits all of the features and functions ascribed to a specific module shall be understood to comprise, or implement, said module.

In particular, it is a possibility that all modules are implemented by program code executed by a computing device (or: computer), e.g. a server or a cloud computing platform.

The computing device may be realized as any device, or any means, for computing, in particular for executing a software, an app, or an algorithm. For example, the computing device may comprise at least one processing unit such as at least one central processing unit, CPU, and/or at least one graphics processing unit, GPU, and/or at least one field-programmable gate array, FPGA, and/or at least one application-specific integrated circuit, ASIC and/or any combination of the foregoing. The computing device may further comprise a working memory operatively connected to the at least one processing unit and/or a non-transitory memory operatively connected to the at least one processing unit and/or the working memory. The computing device may be implemented partially and/or completely in a local apparatus and/or partially and/or completely in a remote system such as by a cloud computing platform.

Here and in the following, for some (especially longer) terms abbreviations (such as "IEGM" for "image embeddings generating module") are used. Usually, the terms will be given followed by the corresponding abbreviations. In some cases, to improve legibility, only the abbreviation will be used, whereas in other cases only the term itself will be used. In all cases, the term itself and its corresponding abbreviation shall be understood to be equivalent.

According to a second aspect, the present invention provides a computer-implemented method for preparing training data, comprising:
- obtaining input data comprising (or consisting of) a plurality of images of a medical scene;
- generating, for each image of the plurality of images, a data array as an image embedding for that image;
- determining, separately for each of a plurality of clustering parameter values, CPV, of a clustering parameter, a respective set of clusters within the plurality of images based on the generated image embeddings;

constructing a trajectory in a parameter space, wherein one dimension of the parameter space represents the plurality of clustering parameter values, CPV, and another dimension of the parameter space is based on the number of clusters determined using a respective clustering parameter value, CPV, of the plurality of clustering parameter values, CPV;
determining a measure of the parameter space between the origin of the parameter space and the trajectory;
receiving a user input; and
indicating changes and/or effects of the user input in/on the measure of the parameter space.

According to a third aspect, the invention provides a computer-implemented method for training a machine learning entity, comprising generating an adapted set of images according to an embodiment of the method of the second aspect of the invention, and using the generated adapted set of images for training a machine learning entity, MLE.

According to a fourth aspect, the invention provides a computer program product comprising executable program code configured to, when executed, perform the method according to any embodiment of the second aspect of the present invention.

According to a fifth aspect, the invention provides a non-transitory computer-readable data storage medium comprising executable program code configured to, when executed, perform the method according to any embodiment of the second aspect of the present invention.

The non-transitory computer-readable data storage medium may comprise, or consist of, any type of computer memory, in particular semiconductor memory such as a solid-state memory. The data storage medium may also comprise, or consist of, a CD, a DVD, a Blu-Ray-Disc, an USB memory stick or the like.

According to a sixth aspect, the invention provides a data stream comprising, or configured to generate, executable program code configured to, when executed, perform the method according to any embodiment of the second aspect of the present invention.

In some advantageous embodiments, options, variants, or refinements of embodiments, the clustering parameter is a clustering threshold.

In some advantageous embodiments, options, variants, or refinements of embodiments, the parameter space is two-dimensional, the trajectory is a one-dimensional curve therein, and the measure is an area under the curve (or: an integral over the curve). It has been found that the area under the curve (herein sometimes abbreviated as "AUC") provides highly useful information about the internal workings of the computing device, in particular the clustering algorithm, and also on the technical usefulness of the plurality of images, for example as a training data set of a machine learning entity.

In some advantageous embodiments, options, variants, or refinements of embodiments, the user interface is configured to receive user input indicating the addition or removal of at least one image to or from the plurality of images received by the input interface. In other words, the user interface may allow a user manipulating the original plurality of images to add or remove one or more images, and to observe the changes and/or effects, which the user input has on the measure, for example the area under the curve, preferably essentially (or exactly) in real time.

In some advantageous embodiments, options, variants, or refinements of embodiments, the computing device further comprises a data adaptation module, DAM, configured to obtain a desired value of the measure of the parameter space (i.e., a value which the measure should ideally adopt), and to generate an adapted set of images by removing images from the plurality of images received by the input interface and/or by adding images to the plurality of images such that the measure of the parameter space determined by the evaluation module, EVAM, based on the adapted set of images, lies within a desired tolerance interval around the desired value of the measure of the parameter space. Thus, an improved set of images may be provided such as improved training data (or: training images) which enable a machine learning entity, MLE, trained with them to train faster/more per epoch and/or to require less computing power and/or data storage.

It is easily understandable that a training data set of, for example, 50 identical images will take a machine learning entity, MLE, trained with this training data set about 50 times as much time as training on only a single one of these identical images, yet the results will usually be identical. It follows that higher diversity within the training data yields more improvement (specifically: a faster decrease of the cost function, at least on average) per training data sample (or: training image). However, the relevant kind of "diversity" is not one that is easily judged by humans but instead one that only machine learning models themselves recognize, or react to. The inventors have found that the present invention allows for a general classification of the quality of a training data set by way of the above-described measure of the parameter set, in particular, the area under the curve, AUC. As one of the special advantages of the present invention, this measure is both useful and understandable for computers and machine learning models as well as for human users.

The user interface may be configured to prompt a user to input the desired value of the measure of the parameter space and/or to specify the desired tolerance interval. The desired value and/or the desired tolerance interval may also be provided automatically by a software, for example over the input interface. It is even possible that a computing device for training a machine learning model automatically instructs the computing device of the present invention to provide a specific number of images having the desired values. Alternatively, or if neither the user nor a software inputs any desired values, pre-set values may be used, for example, 0.55±0.05. Still alternatively, the data adaptation module, DAM, may be configured to increase the measure as much as possible, given the plurality of images as well as, optionally, at least one package of images that could be added to them.

In some advantageous embodiments, options, variants, or refinements of embodiments, the data adaptation module, DAM, is configured to remove images based on a random number algorithm. Thus, images may be randomly removed for a pre-set number of images or images combinations, for a pre-set amount of time, and/or until an adapted set of images with a desired measure (e.g., the area under the curve, AUC) has been generated.

In some advantageous embodiments, options, variants, or refinements of embodiments, the data adaptation module, DAM, comprises a machine learning module, MLM, and is configured to eliminate images based on an output of the machine learning module, MLM. The machine learning model, MLM, may have been trained to select, from a plurality of images it receives as its input, images to be removed in order to increase the measure (in particular, the area under the curve, AUC).

In some advantageous embodiments, options, variants, or refinements of embodiments, the computing device further comprises a training module configured to use the adapted set of images for training a machine learning entity, MLE. The training may be performed according to any known methods (e.g., supervised, semi-supervised or unsupervised training), using any known architectures, algorithms, hyper parameters, cost functions, and the like. It is believed that the training data improved according to the teachings of the present invention are universally applicable and generally more efficient for any kind of training.

In some advantageous embodiments, options, variants, or refinements of embodiments, the computing device further comprises a visualization module configured to perform a dimensional reduction on the image embeddings generated by the image embeddings generating module, IEGM, into a two-dimensional reduced parameter space. The user interface may comprise a display configured to indicate positions of images within the two-dimensional reduced parameter space. Thus, the user is provided with an information about the internal state of the image embeddings generating module, IEGM, the clustering module, CLUM, and so on, in a manner that is objectively easier to grasp than previously known methods.

In some advantageous embodiments, options, variants, or refinements of embodiments, the method according to the second aspect of the present invention further comprises the steps of:
obtaining a desired value of the measure of the parameter space; and
generating an adapted set of images by removing images from the plurality of images and/or adding images to the plurality of images such that the measure determined by the evaluation module, EVAM, based on the adapted set of images, lies within a desired tolerance interval around the desired value of the measure.

In some advantageous embodiments, options, variants, or refinements of embodiments, the method further comprises the steps of:
performing a dimensional reduction on the image embeddings generated by the image embeddings generating module, IEGM, into a two-dimensional reduced parameter space; and
indicating positions of images within the two-dimensional reduced parameter space on a display.

Further advantageous variants, options, embodiments and modifications will be described with respect to the description and the corresponding drawings as well as in the dependent claims.

Further applicability of the present invention will become apparent from the following figures, detailed description and claims. However, it should be understood that the detailed description and specific examples, while indicating preferred embodiments of the invention, are given by way of illustration only, since various changes and modifications within the spirit and scope of the invention will become apparent to those skilled in the art.

### Brief description of the figures

Aspects of the present disclosure will be better understood with reference to the following figures. The components in the drawings are not necessarily to scale, emphasis being placed instead upon clearly illustrating the principles of the present disclosure. Parts in the different figures that correspond to the same elements have been indicated with the same reference numerals in the figures, in which:
- Fig. 1: shows a schematic block diagram for illustrating a computing device according to an embodiment of the present invention;
- Fig. 2: shows a potential architecture for a machine-learning algorithm for use in any embodiment of the present invention;
- Fig. 3 and Fig. 4: illustrate the clustering method employed by the clustering module described with respect to Fig. 1;
- Fig. 5: shows a special selection of images for use in the discussion of the present invention;
- Fig. 6: shows a graph indicating properties of the images of Fig. 5;
- Fig. 7: shows a graph similar to the one of Fig. 6 for a different set of images;
- Fig. 8: shows a graph similar to the one of Fig. 6 for yet another set of images;
- Fig. 9: illustrates the difference between images of Fig. 5 within the same cluster depending on a clustering threshold value used for the clustering;
- Fig. 10: illustrates a two-dimensional reduced parameter space and the position of the images of Fig. 5 therein;
- Fig. 11: shows how the images of Fig. 5 are clustered in the parameter space of Fig. 10 when the clustering threshold value is set to 10;
- Fig. 12: shows a schematic flow diagram illustrating a method according to an embodiment of the present invention;
- Fig. 13: shows a schematic flow diagram illustrating a method according to another embodiment of the present invention;
- Fig. 14: shows a schematic block diagram illustrating a computer program product according to another embodiment of the present invention; and
- Fig. 15: shows a schematic block diagram illustrating a data storage medium according to yet another embodiment of the present invention.

The figures are not necessarily to scale, and certain components can be shown in generalized or schematic form in the interest of clarity and conciseness. In some instances, well-known structures and devices are shown in block diagram form in order to avoid obscuring the concepts of the present invention.

### Detailed description of the figures

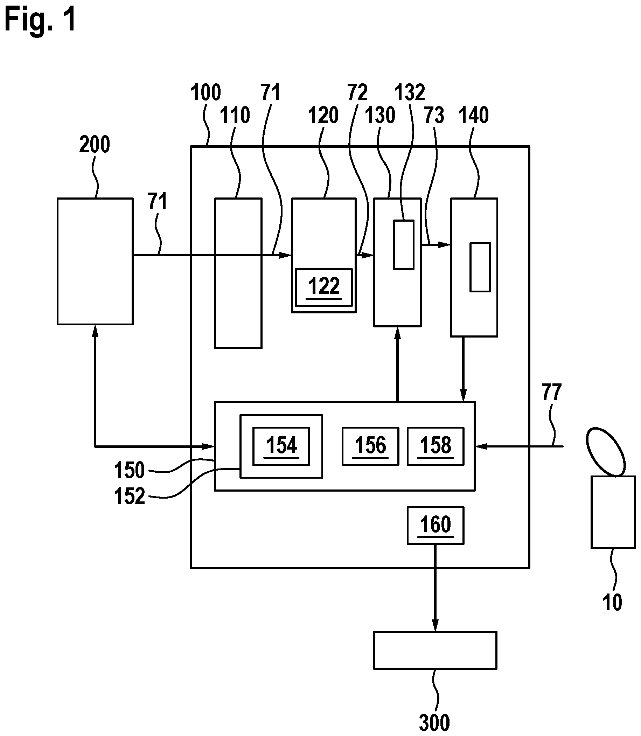

Fig. 1 shows a schematic block diagram for illustrating a computing device 100 according to an embodiment of the present invention. The computing device 100 comprises an input interface 110 configured to receive a plurality of images 71 of a medical scene from a data storage 200. The data storage 200 may be a picture archiving and communications system, PACS, of a hospital, a medical research facility or the like, or any kind of data storage medium or device. The data storage 200 may be local, (i.e., arranged at the same facility as the computing device 100) or remote, for example, realized by a cloud computing platform.

The images 71 may stem from the camera of a medical instrument such as a video endoscope, from a static camera such as a monitoring camera of a hospital room and/or the like. The images 71 may be received by the input interface 110 in a wireless and/or a wire-bound manner using any known communication system, network structure, or protocol. The computing device 100 may be part of another device, which also comprises the source of the images 71, in which case the transmission of the images 71 to the input interface 110 will usually be wire-bound.

The computing device 100 further comprises an image embedding generating module, IEGM 120. The IEGM 120 is configured to receive, as its input, the plurality of images 71 and to generate a data array as an image embedding 72 for each image. Similar to the situation of machine-learning algorithms, which are used in natural language processing (NLP) to generate word embeddings with numerical entries corresponding to latent features describing the semantic content of corresponding words, the image embedding may be a matrix or, preferably, a vector with numerical entries, which correspond to latent features describing the content of an image.

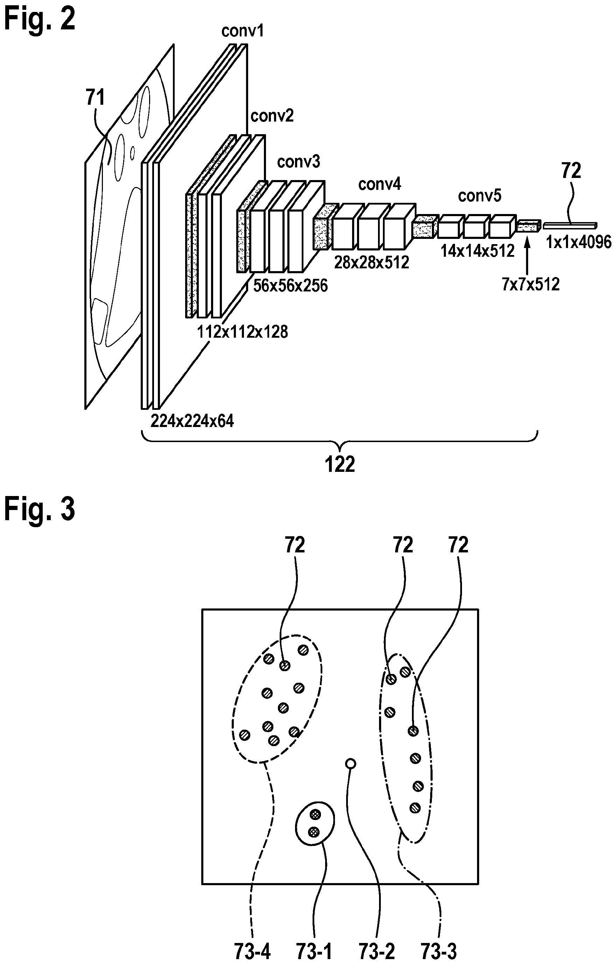

Thus, the image embedding generating module, IEGM 120, may comprise a machine-learning algorithm 122 configured and trained to generate the image embeddings 72 for each of the input images 71. This machine-learning algorithm 122 may be trained in the same way as corresponding machine-learning algorithms are trained to generate word embeddings in the case of natural language processing, NLP. An example for a method and at the same time an architecture of a machine-learning algorithm 122 for generating an image embedding 72 from an image 71 is shown in and described with respect to Fig. 2 in the following.

Fig. 2 shows a potential architecture for a machine-learning algorithm 122, illustrated in the known manner by rectangular blocks. In Fig. 2, as an example, the processing of a grayscale input image 71 with 224 x 224 pixels, each carrying a grayscale value typically between 0 and 255, is illustrated. As is shown in Fig. 2, several convolutional layers conv1 ... conv5 are applied, each followed by a pooling layer. It shall be understood that also higher or lower numbers of convolutional layers may be provided.

Finally, a fully connected convolutional layer fc6 is applied. In this way, the dimensionality of the original input image 71 of 224 x 224 x 1 is transformed to 224 x 224 x 64, then to 112 x 112 x 128, then to 56 x 56 x 256, then to 28 x 28 x 512, then to 14 x 14 x 512, then to 7 x 7 x 512 and finally to 1 × 1 × 4096. Thus, the end result is effectively a single vector with 4096 entries, which constitutes the image embedding 72 for the input image 71. The same machine-learning algorithm 122 will be applied to each image 71 of the plurality of received images 71 of the medical scene so as to generate a corresponding plurality of image embeddings 72.

In case of colored images (for example "RGB images" having a Red, Green, and Blue channel) or in general multi-spectral images, the same process as illustrated in and described with respect to Fig. 2 may be applied, with the difference that the input images 71 will have more than one channel, for example 3 channels in case of an RGB image. Each channel usually comprises an intensity value for each pixel of the image, indicating the intensity with which the spectral wavelength or spectral range, to which the channel belongs, contributes to the spectrum of said pixel.

Referring to Fig. 1, the computing device 100 also comprises a clustering module, CLUM 130, configured to determine a plurality of clusters 73 within the plurality of images 71 based on the generated image embeddings 72.

The clustering module, CLUM 130, may comprise a distance-calculating module, DICM 132, which is configured to calculate distances between the generated image embeddings 72 according to a predefined distance metric such as a Euclidean metric or the like. Again, it should be understood that in the example of Fig. 2, the predefined metric will be a 4096-dimensional metric. The clustering module, CLUM 130, may be configured to generate the clusters 73 at least partially based on the calculated distances.

Specifically, the clustering module, CLUM 130, may be configured to perform a hierarchical agglomerative clustering method. This method is also known as agglomerative nesting (AGNES) and starts by treating each object (here: image embedding 72) as a singleton cluster.

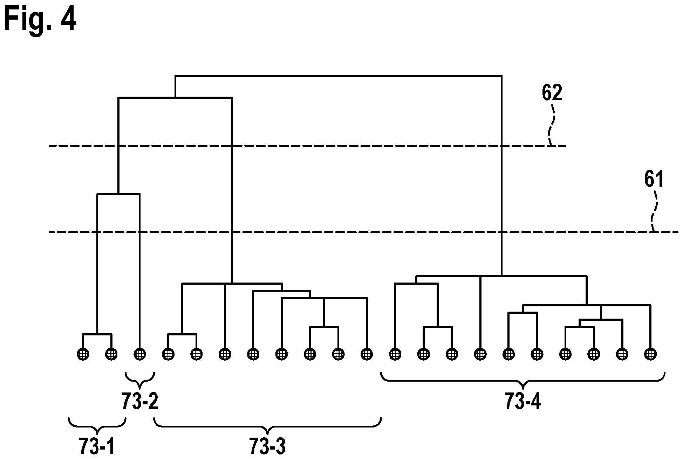

Fig. 3 and Fig. 4 illustrate the clustering method employed by the clustering module, CLUM 130. Fig. 3 shows a schematic illustration of image embeddings 72 as dots in a two-dimensional vector space. As has been described in the foregoing, typically the vector or data array representing the image embedding 72 will have substantively more entries, for example 4096 entries, as illustrated in Fig. 2. Thus, the parameter space in Fig. 3 would in that case be 4096-dimensional. Here, the two-dimensional illustration is used for ease of understanding.

In this example, 21 image embeddings 72 are depicted. Again, it should be understood that in reality the number of images 71 will typically be much higher than 21. In Fig. 3, the image embeddings 72 have already been visually grouped into three clusters 73-1, 73-2, 73-3, 73-4. Fig. 4 illustrates how the choice of a particular clustering threshold value 61, 62 influences the number of clusters 73-i being found. A comparatively low clustering threshold value such as the clustering threshold value 61 in Fig. 4 results in comparatively more clusters of comparatively smaller size, while a comparatively higher clustering threshold value such as the clustering threshold value 62 in Fig. 4 results in less clusters with typically more items grouped therein. (For the sake of clarity: "61" and "62" in this paragraph and context refer to the reference signs "61" and "62" in Fig. 4, respectively, and do not mean that the clustering threshold value takes on the numerical value of 61 or 62, respectively; the numerical clustering threshold values are unspecified in this exemplary depiction).

For example, in the schematic illustration of Fig. 4, raising the clustering threshold from the clustering threshold value 61 to the clustering threshold value 62 would result in not four but only three total clusters 73, because the first cluster 73-1 and the second cluster 73-2 would be grouped into the same cluster. It is evident from Fig. 4 that an even higher clustering threshold value would result in there being only two clusters, because the third cluster 73-3 would also be grouped together with the first and the second cluster 73-1, 73-2.

Conversely, further lowering the clustering threshold from the clustering threshold value 61 would eventually result in breaking up the third and/or fourth cluster 73-3, 73-4 into additional, smaller clusters 73.

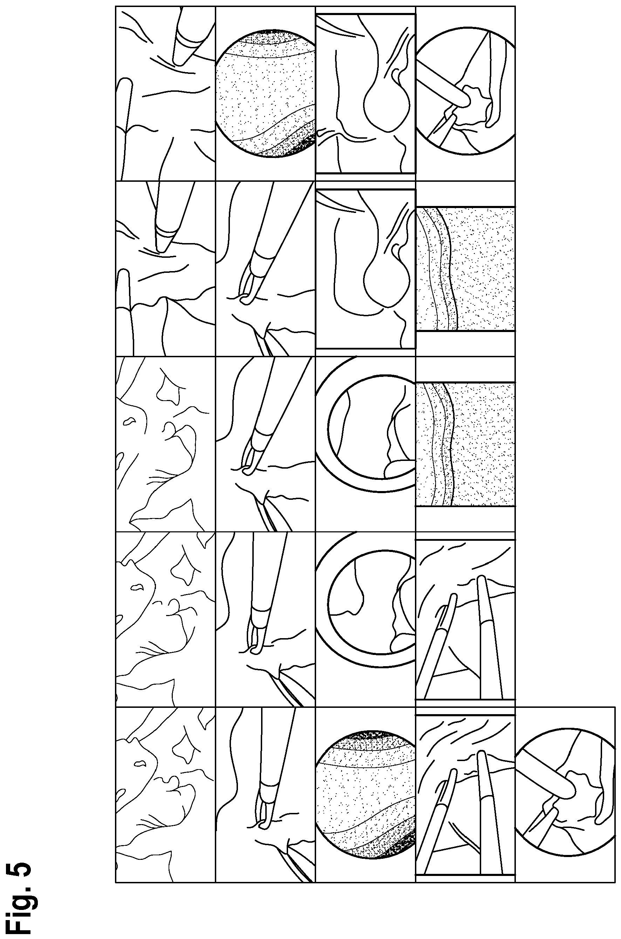

Fig. 5 shows a special selection of images 71-1, 71-2, ..., 71-21 (in the following also collectively designated as 71-i or simply as 71 as in the foregoing) that was put together to illustrate the technical effects of the present invention. The images 71-i in Fig. 5 deliberately include nine groups, each of two to four images 71-i that seem similar to the human eye but are slightly different. The total number N of images 71-i is N=21. It is evident that, for a human, it is difficult to discern whether the similar images provide additional value in, for example, a set of training data. In particular, a human has difficulties in determining how different the images are to a machine learning model.

Returning to Fig. 1, the computing device 100 therefore further comprises an evaluation module, EVAM 140, configured to provide an evaluation of the plurality of images 71 provided, in particular with respect to different clustering parameter values, CPV, of a clustering parameter used in the clustering algorithm by the clustering module, CLUM 130. The specific workings of the evaluation module, EVAM 140, will be described in the following in detail.

In the present example, the clustering parameter is the clustering threshold (see also the discussion of Fig. 3 and Fig. 4 in the foregoing), and the corresponding clustering parameter values, CPV, are therefore clustering threshold values, i.e. values to which the clustering threshold may be set.

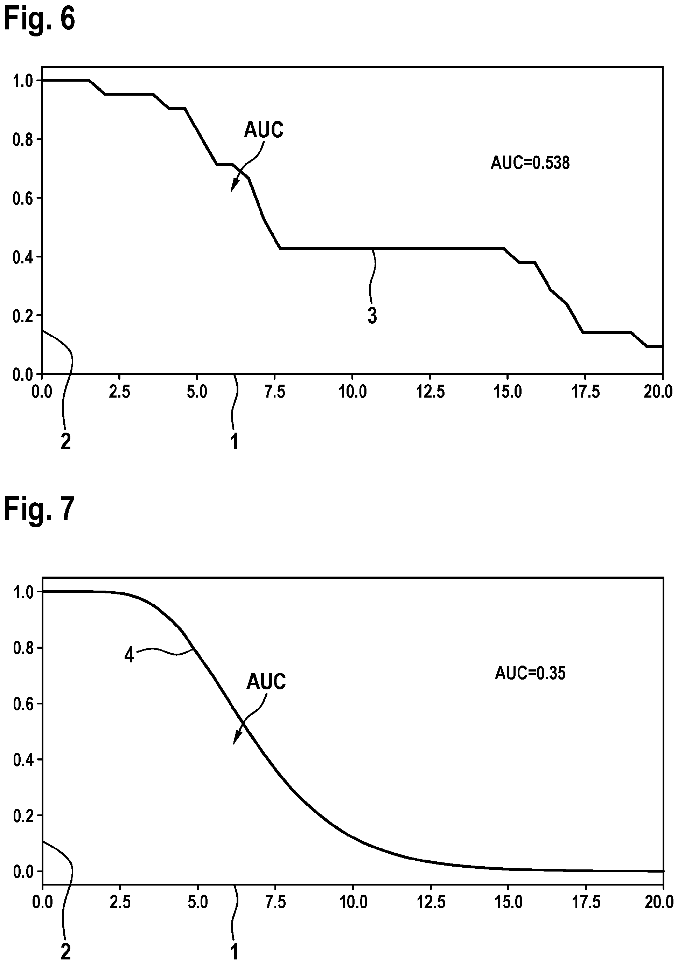

Fig. 6 shows a graph in which the horizontal axis indicates clustering threshold values 1, and the horizontal axis shows a variable based on the number of clusters 73 within the set of clusters 73 determined by the clustering module, CLUM 130, when using the respective clustering threshold value 1. In the present example, the variable of the vertical axis is a fraction 2 of the number of clusters 73 divided by the number N of images 71-i (i=1..N) in the plurality of images.

The curve 3 in the graph of Fig. 6 corresponds to the plurality of images 71-i shown in Fig. 5. In this depiction, the lowest possible clustering threshold value of 0 means that each image 71-i is its own cluster 73, so that the number of clusters 73 is equal to the number N of images 71-i and that the value of the fraction 2 starts with 1.0 on the vertical axis of Fig. 6. Increasing the clustering threshold value 1 leads to step-wise lowering of this fraction 2, until, at some point, all images 71-i would be grouped into a single cluster 73.

The inventors have found that the area under the curve, AUC, in a graph as the one in Fig. 6, is a measure that provides valuable information about the content of the plurality of images 71 in a way that is - objectively - easily understandably by a human operator. For most technical applications, a curve 3 with a large AUC (roughly speaking: a slow-falling curve 3) would be preferred, as it means that, for a large portion of the available parameter space, with each increment of the clustering threshold value, incrementally additional information is added to each cluster 73. Conversely, it means that the plurality of images 71 has a rich and diverse structure with many small variations from each image to the next. By contrast, a curve 3 with a low AUC (roughly speaking: a fast-falling curve 3) would mean that apart from initial differences, all of the images 71-i of the plurality of images 71 are essentially the same within each of a small number of clusters, as the entire change in the curve 3 would happen over a small portion of the available parameter space.

The example of the images 71-i of Fig. 5 produces the curve 3 of Fig. 6 with an AUC=0.538 when normalized to the maximum available area (here: 1.0x20.0=20.0). As has been explained, the AUC provides the user with an intuitive but still richly informative measure of how the plurality of images 71 is seen/received/treated by a machine or a machine learning model (here: the clustering module, CLUM 130).

As a simple thought experiment, a plurality of 21 identical images would have an area under the curve, AUC, of almost zero as its corresponding curve would instantly drop off from 1 to zero at the clustering threshold of 1. Correspondingly, a plurality of 21 completely different images would have a very slowly decreasing curve with a large AUC.

Fig. 7 shows a comparative example of a curve 4 generated by the same method using the evaluation module, EVAM 140, but from another plurality of images 71. The AUC=0.35 for the curve 4. By comparing Fig. 6 and Fig. 7, it is evident that both curves 3 and 4 meet their halfway-values of 0.5 at roughly the same clustering threshold value (about 7.0 to 7.5) but exhibit large differences in their AUC. Thus, without having to see the curves 3, 4 themselves, a human user is put into a position where they can judge, simply by comparing the AUC, which plurality of images 71 has the better properties for a given task. As has been discussed, in general a higher AUC will be preferred for most tasks such as training a machine learning model. Providing the numerical AUC value also enables automatically optimizing a body of training data as will be described in the following.

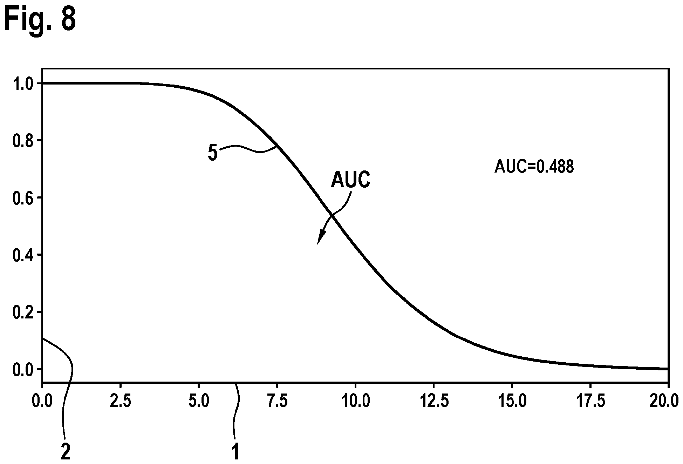

Fig. 8 shows another comparative example of a curve 5 generated by the same method using the evaluation module, EVAM 140, but from another plurality of images 71. Although curve 5 may look, to the human observer, to be more similar to curve 4 than to curve 3, its AUC=0.488 is much closer to the one of curve 3 than to the one of curve 4. This comparison illustrates how much information about the internal workings of the clustering module, CLUM 130, is hidden within the AUC, which would otherwise not be accessible to a human user.

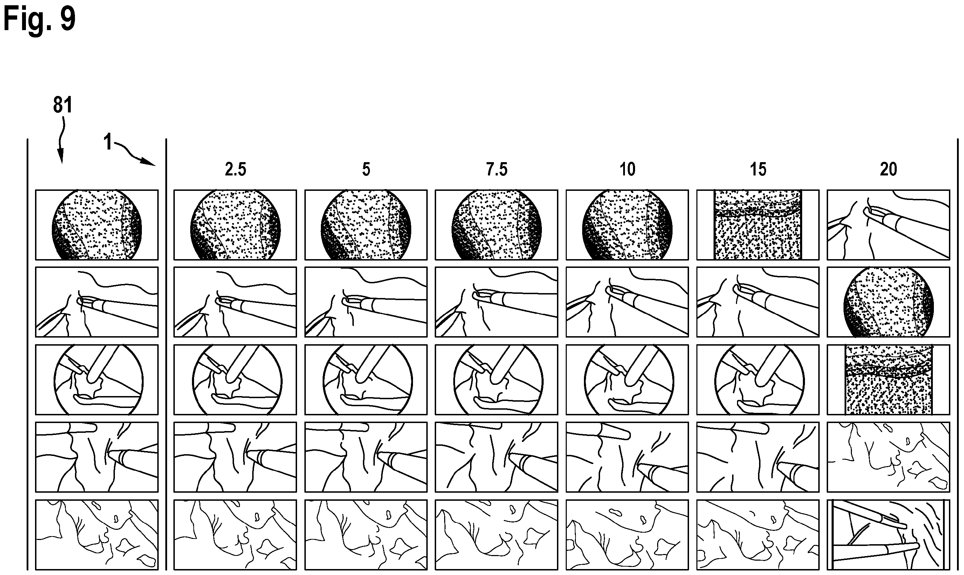

Fig. 9 illustrates, still using the images 71-i of Fig. 5 as basis, how much of a difference between images 71-i within one cluster 73 is allowed, depending on the clustering threshold value 1, shown in Fig. 8 for values of 2.5, 5, 7.5, 10, 15 and 20. The first column shows an "anchor image" 81, the other columns show, in each line, the most distant (according to a distance metric in the parameter space of the image embeddings 72) image 71-i in the same cluster as the corresponding anchor image 81. An asterisk ("*") indicates that the cluster 73 so far only consists of the anchor image 81 itself. For most of the anchor images 81, the most distant image changes when the clustering threshold value 1 changes from 5 to 7.5, corresponding to the sharp decline in curve 3 in Fig. 6 in that area. However, the most complete information about the internal workings of - in particular - the clustering module, CLUM 130, are provided by the AUC, as has been shown in the foregoing. Fig. 9 illustrates how difficult and time-consuming - especially for a much larger body of images 71 than the 21 images of Fig. 5 - it would be for a human to try understanding the behavior of the clustering module, CLUM 130, from the images 71 itself, as opposed to from the AUC.

Returning to Fig. 1, the computing device 100 further comprises a user interface 150 configured to receive a user input 77 from a user 10 and to indicate changes and/or effects of the user input on/in the measure of the parameter space, here: on the AUC.

For example, the user interface 150 may allow the user 10 to manipulate the plurality of images 71 received from the input interface 110, such as removing images 71 from it and/or adding images 71 to it. In particular, the user interface 150 may have access to a database of additional images. This database may be the data storage 200 as described in the foregoing and as shown in Fig. 1, or it may be any other database, e.g., a public database, a commercial database, an online database, an onsite database, and so on. The user interface 150 may allow the user 10 to select additional images or packages of images from the database and to have the computing device 100 evaluate the impact of the adding of these images to the plurality of images 71, specifically on the AUC.

This allows the user 10 to determine, for example, whether the additional effort (e.g., financial, but more importantly, in computing time and computing resources) of including the additional images is sensible from a technical standpoint. If the AUC would, for example, decrease or essentially remain at its previous value, the inclusion of the additional images within the plurality of images 71 will not be desirable.

Accordingly, the user 10 may, for a large selection of candidate packages of images or even individual candidate images, select the most impactful ones, i.e. the ones which most increase the AUC, either in absolute terms or in relative terms, for example, compared to the number of additional images (corresponding to the increased effort). For example, adding package A with 50 images which increases the AUC by 0.05 has a worse relative impact than package B with 100 images which increases the AUC by 0.06.

Furthermore, the computing device 100 may include a data adaptation module, DAM 152, configured to obtain a desired value of the measure of the parameter space (e.g., an AUC of AUC=0.6), and to generate, preferably automatically, an adapted set of images, such that the measure of the parameter space determined by the evaluation module, EVAM 140, based on the adapted set of images, lies within a desired tolerance interval around the desired value of the measure of the parameter space. In Fig. 1, the DAM 152 is shown as a part of the user interface 150; however, it is evident that it may also be provided as a separate module entirely.

In some variants, the data adaptation module, DAM 152, may interact with a database (such as the data storage 200, or any of the other types of database described in the foregoing) to retrieve suitable images to generate a plurality of images 71 from scratch.

In other variants, the data adaptation module, DAM 152, generates the adapted set of images based on the images 71 received from the input interface 100, either by removing images 71 from the plurality of images 71 and/or by adding images (individually or in packages), e.g. from said database of additional images, such that the measure of the parameter space determined by the evaluation module, EVAM 140, based on the adapted set of images, lies within a desired tolerance interval around the desired value of the measure of the parameter space. The DAM 152 may have access to remove also images that have been added from said database: for example, it may first add data from a specific package within the database, and then proceed to remove some images therefrom. Alternatively, it may only add individual images from the package.

The user interface 150 may be configured to prompt a user 10 to input the desired value of the measure (here: the AUC) of the parameter space and/or to specify the desired tolerance interval, wherein a respective preset value may be given for either or both.

The data adaptation module, DAM 152, may be configured to remove images 71 randomly, i.e., based on a random number algorithm, in order to remove images to bring the AUC closer to the desired value of the AUC. Additionally or alternatively, the DAM 152 may comprise a machine learning module, MLM 154, configured to determine images to be removed. The DAM 152 may be configured to remove the images determined by the MLM 154 to be removed. The MLM 154 may be trained using a loss function that is based on the measure of the parameter space (here: the AUC).

The computing device 100 may further comprise a training module 160 configured to use the adapted set of images (or even the original plurality of images 71) for training a machine learning entity, MLE 300, such as an artificial intelligence entity, for example, an artificial neural network or the like. The training module 160 may be configured to perform the training according to any known methods (e.g., supervised, semi-supervised or unsupervised training), using any known architectures (e.g., convolutional neural networks, fully-connected neural networks etc.), algorithms, hyper parameters, cost functions, and the like.

Additionally, or alternatively, the adapted set of images 71 may also be provided to an external receiver such as a cloud storage, a PACS, an online marketplace, a training sample database and/or the like. For example, the adapted set may be transmitted to and stored in the data storage 200, optionally together with information about its properties such as the measure AUC determined from it.

The computing device 100, in particular the user interface 150, may further comprise a visualization module 156 configured to perform a dimensional reduction on the image embeddings 72 generated by the image embeddings generating module, IEGM 120, into a two-dimensional reduced parameter space. The user interface 150 may comprise a display 158 configured to indicate positions of images 71 within the two-dimensional reduced parameter space. The display 158 may, as part of the user interface 150, provide additional capabilities.

For example, the user interface 150 may allow a user to select a marker indicating a position of one of the images 71 within the two-dimensional reduced parameter space. The display 158 may be configured to display, as a response thereto, to the user 10 additional information about said image 71. For example, the display 158 may display to the user 10 the image 71 itself and/or alphanumeric text information about said image 71 such as its size, a time of acquiring the image 71, a package of images 71 said image 71 belongs to, and/or the like. This allows the user 10 to retrieve in a quick and intuitive way information about the images 71 itself, as well as about the internal state of the image embeddings generating module, IEGM 120, and/or the clustering module, CLUM 130, since the abstract multi-dimensional image embeddings 72 are transformed into humanly-intelligible two-dimensional distributions of markers (e.g., points).

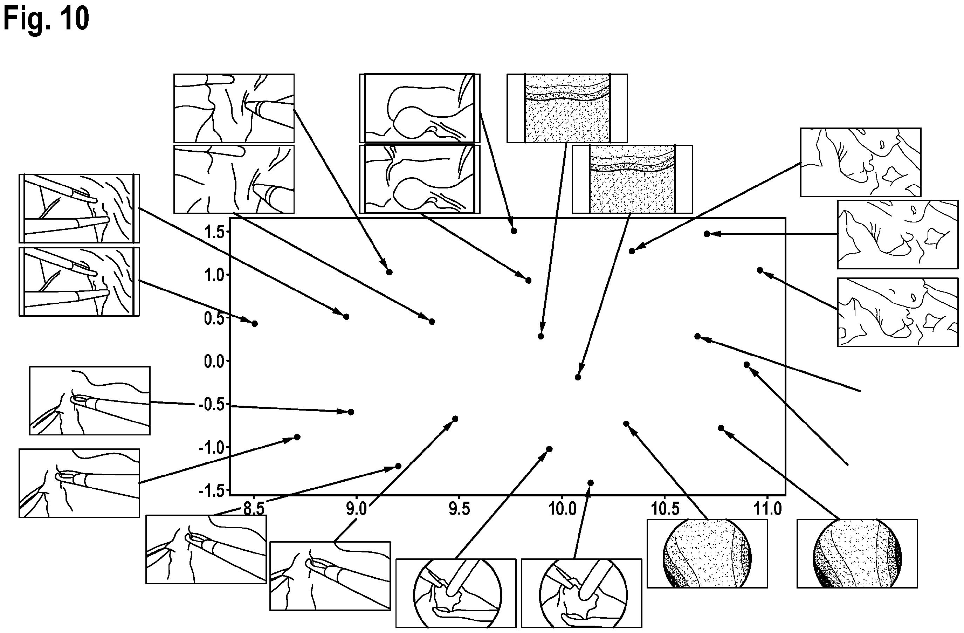

Fig. 10 illustrates such a two-dimensional reduced parameter space and the position of the shown images 71-i of the plurality of images 71 of Fig. 5 therein.

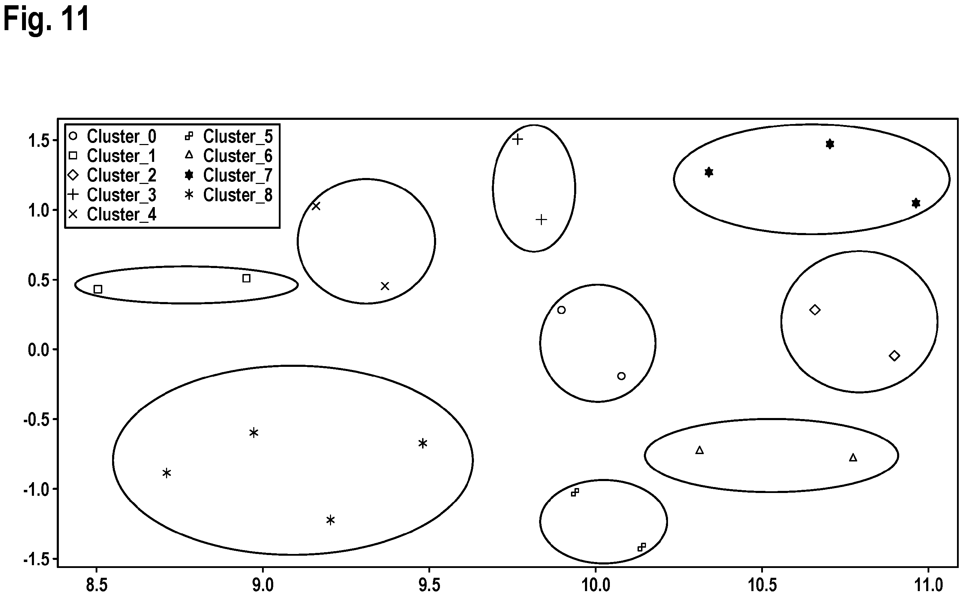

Fig. 11 shows how, for a clustering threshold value of 10, these images 71-1..71-21 are clustered in nine clusters 73, wherein the various ellipses are there to indicate to the human eye the belonging to the same cluster 73, and do not show the specific extent of the cluster 73 in the parameter space.

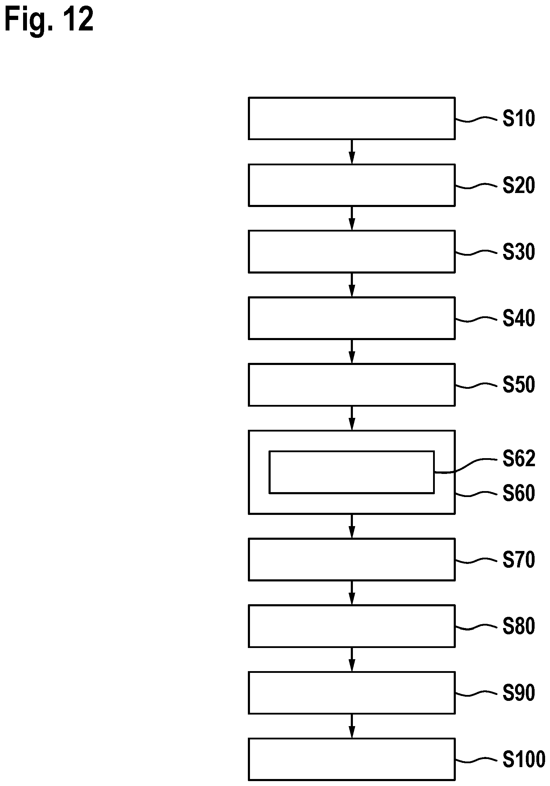

Fig. 12 shows a schematic flow diagram illustrating a method for preparing training data according to an embodiment of the present invention. The method of Fig. 12 may be performed using any computing devices according to any embodiments of the present invention, in particular as described with respect to Fig. 1, but also independently. Any variants, options, embodiments, advantages, and refinements, described for any computing device herein may also be applied to the present method and vice versa.

In a step S10, input data comprising (or consisting of) a plurality of images 71 of a medical scene are obtained, for example, as has been described in the foregoing with respect to the input interface 110. In particular, the input images 71 may be provided by a data storage 200, but they may also, partially or completely, be provided by an image-capturing device such as a camera on hospital premises (e.g. in post-operational recovery room, in an operating room, in a waiting room) or on a medical instrument (e.g., an endoscope or the like).

In a step S20, for each image 71 of the plurality of images 71, a data array is generated as an image embedding 72 for that image, in particular as has been described with respect to the image embeddings generating module, IEGM 120, in the foregoing.

In a step S30, a plurality of clusters 73 within the plurality of images 71 are determined based on the generated image embeddings 72, in particular as has been described in the foregoing with respect to the clustering module, CLUM 130.

In a step S40, a trajectory 3, 4, 5 in a parameter space is constructed, wherein one dimension of the parameter space represents the plurality of clustering parameter values, CPV 1, and another dimension of the parameter space is based on the number N of clusters 73 determined in step S30 using a respective clustering parameter value, CPV 1, of the plurality of clustering parameter values, CPV 1. Specifically, one dimension of the parameter space may represent the fraction of the number N of clusters 73, divided by the number of images 71 in the original plurality of images 71.

In a step S50, a measure AUC of the parameter space between the original of the parameter space and the trajectory 3, 4, 5 is determined, for example an area under the curve, AUC, of the trajectory 3, 4, 5, preferably normalized to the maximum area of the utilized parameter space (20.0 in Fig. 5, 6, and 7).

Step S40 and/or step S50 may be performed in particular as has been described in the foregoing with respect to the evaluation module, EVAM 140.

In a step S60, a user input 77 is received, and in a step S70, changes and/or effects of said user input 77 in/on the measure AUC of the parameter space are indicated, for example using a user interface 150 as has been described in the foregoing.

Receiving S60 the user input 77 may comprise a step S62 of obtaining a desired value of (or: for) the measure AUC. The method may then comprise a step S80 of generating an adapted set of images by adding and/or removing images 71 from the plurality of images 71 such that the measure AUC, based on the adapted set of images, lies within a desired tolerance interval around the desired value of the measure. Steps S62 and S80 may be performed as has been described in the foregoing, in particular with respect to the data adaptation module 152. For example, for the generating S80 of the adapted set of images, a random removal algorithm may be employed and/or a machine learning model.

The method may further comprise a step of performing S90 a dimensional reduction on the image embeddings 72 generated by the image embeddings generating module, IEGM 120, into a two-dimensional reduced parameter space, for example as has been discussed in the foregoing with respect to Fig. 10 and Fig. 11. The method may then comprise a step of indicating S100 positions of images 71 within the two-dimensional reduced parameter space on a display 158, for example as discussed and illustrated in the foregoing with respect to Fig. 10 and Fig. 11.

At any point may the plurality of images 71 or the adapted set of images be output as training data, e.g., either to a data storage 200 or to a training module 160 as has been described in the foregoing.

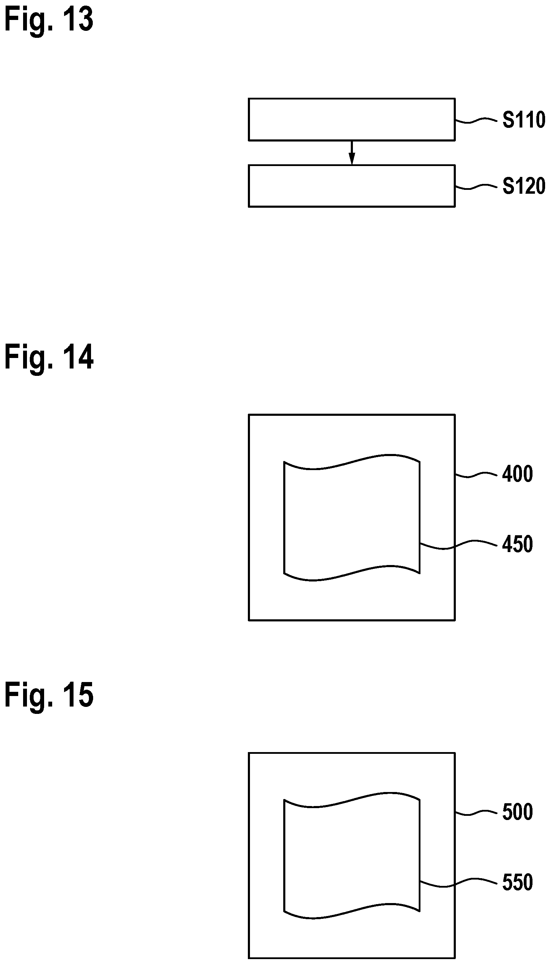

Fig. 13 shows a schematic flow diagram illustrating a method for training a machine learning entity, MLE 300. The method of Fig. 13 may be performed using any computing devices according to any embodiments of the present invention, in particular as described with respect to Fig. 1, but also independently. Any variants, options, embodiments, advantages, and refinements, described for any computing device herein may also be applied to the present method and vice versa.

In a step S110, an adapted set of images is generated as has been described in the foregoing with respect to Fig. 12. In a step S120, the generated adapted set of images is used for training a machine learning entity, MLE 300, in particular as has been described in the foregoing with respect to the training module 160.

Fig. 14 shows a schematic block diagram illustrating a computer program product 400 according to an embodiment of the fourth aspect of the present invention. The computer program product 400 comprises executable program code 450 configured to, when executed, perform the method according to any embodiment of the second or the third aspect of the present invention, in particular as has been described with respect to the preceding figures 12 and 13.

Fig. 15 shows a schematic block diagram illustrating a non-transitory computer-readable data storage medium 500 according to an embodiment of the fifth aspect of the present invention. The data storage medium 500 comprises executable program code 550 configured to, when executed, perform the method according to any embodiment of the second or the third aspect of the present invention, in particular as has been described with respect to the preceding figures 12 and 13.

The non-transitory computer-readable data storage medium may comprise, or consist of, any type of computer memory, in particular semiconductor memory such as a solid-state memory. The data storage medium may also comprise, or consist of, a CD, a DVD, a Blu-Ray-Disc, an USB memory stick or the like.

As has been described in the foregoing, embodiments may be based on using a machine-learning model or machine-learning algorithm. Machine learning may refer to algorithms and statistical models that computer systems may use to perform a specific task without using explicit instructions, instead relying on models and inference.

For example, in machine-learning, instead of a rule-based transformation of data, a transformation of data may be used, that is inferred from an analysis of historical and/or training data. For example, the content of images may be analyzed using a machine-learning model or using a machine-learning algorithm. In order for the machine-learning model to analyze the content of an image, the machine-learning model may be trained using training images as input and training content information as output. By training the machine-learning model with a large number of training images and/or training sequences (e.g. words or sentences) and associated training content information (e.g. labels or annotations), the machine-learning model "learns" to recognize the content of the images, so the content of images that are not included in the training data can be recognized using the machine-learning model.

The same principle may be used for other kinds of sensor data as well: By training a machine-learning model using training sensor data and a desired output, the machine-learning model "learns" a transformation between the sensor data and the output, which can be used to provide an output based on non-training sensor data provided to the machine-learning model. The provided data (e.g. sensor data, metadata and/or image data) may be preprocessed to obtain a feature vector, which is used as input to the machine-learning model.

Machine-learning models may be trained using training input data. The examples specified above use a training method called "supervised learning". In supervised learning, the machine-learning model is trained using a plurality of training samples, wherein each sample may comprise a plurality of input data values, and a plurality of desired output values, i.e. each training sample is associated with a desired output value. By specifying both training samples and desired output values, the machine-learning model "learns" which output value to provide based on an input sample that is similar to the samples provided during the training.

Besides supervised learning, semi-supervised learning may be used. In semi-supervised learning, some of the training samples lack a corresponding desired output value. Supervised learning may be based on a supervised learning algorithm (e.g. a classification algorithm, a regression algorithm or a similarity learning algorithm. Classification algorithms may be used when the outputs are restricted to a limited set of values (categorical variables), i.e. the input is classified to one of the limited set of values. Regression algorithms may be used when the outputs may have any numerical value (within a range). preferably essentially (or exactly) in real time.

Similarity learning algorithms may be similar to both classification and regression algorithms but are based on learning from examples using a similarity function that measures how similar or related two objects are. Apart from supervised or semi-supervised learning, unsupervised learning may be used to train the machine-learning model. In unsupervised learning, (only) input data might be supplied and an unsupervised learning algorithm may be used to find structure in the input data (e.g. by grouping or clustering the input data, finding commonalities in the data). Clustering is the assignment of input data comprising a plurality of input values into subsets (clusters) so that input values within the same cluster are similar according to one or more (pre-defined) similarity criteria, while being dissimilar to input values that are included in other clusters.

Reinforcement learning is a third group of machine-learning algorithms. In other words, reinforcement learning may be used to train the machine-learning model. In reinforcement learning, one or more software actors (called "software agents") are trained to take actions in an environment. Based on the taken actions, a reward is calculated. Reinforcement learning is based on training the one or more software agents to choose the actions such, that the cumulative reward is increased, leading to software agents that become better at the task they are given (as evidenced by increasing rewards). Furthermore, some techniques may be applied to some of the machine-learning algorithms.

For example, feature learning may be used. In other words, the machine-learning model may at least partially be trained using feature learning, and/or the machine-learning algorithm may comprise a feature learning component. Feature learning algorithms, which may be called representation learning algorithms, may preserve the information in their input but also transform it in a way that makes it useful, often as a pre-processing step before performing classification or predictions. Feature learning may be based on principal components analysis or cluster analysis, for example.

In some examples, anomaly detection (i.e. outlier detection) may be used, which is aimed at providing an identification of input values that raise suspicions by differing significantly from the majority of input or training data. In other words, the machine-learning model may at least partially be trained using anomaly detection, and/or the machine-learning algorithm may comprise an anomaly detection component.

In some examples, the machine-learning algorithm may use a decision tree as a predictive model. In other words, the machine-learning model may be based on a decision tree. In a decision tree, observations about an item (e.g. a set of input values) may be represented by the branches of the decision tree, and an output value corresponding to the item may be represented by the leaves of the decision tree. Decision trees may support both discrete values and continuous values as output values. If discrete values are used, the decision tree may be denoted a classification tree, if continuous values are used, the decision tree may be denoted a regression tree.

Association rules are a further technique that may be used in machine-learning algorithms. In other words, the machine-learning model may be based on one or more association rules. Association rules are created by identifying relationships between variables in large amounts of data. The machine-learning algorithm may identify and/or utilize one or more relational rules that represent the knowledge that is derived from the data. The rules may e.g. be used to store, manipulate or apply the knowledge.

Machine-learning algorithms are usually based on a machine-learning model. In other words, the term "machine-learning algorithm" may denote a set of instructions that may be used to create, train or use a machine-learning model. The term "machine-learning model" may denote a data structure and/or set of rules that represents the learned knowledge (e.g. based on the training performed by the machine-learning algorithm). In embodiments, the usage of a machine-learning algorithm may imply the usage of an underlying machine-learning model (or of a plurality of underlying machine-learning models). The usage of a machine-learning model may imply that the machine-learning model and/or the data structure/set of rules that is the machine-learning model is trained by a machine-learning algorithm.

For example, the machine-learning model may be an artificial neural network (ANN). ANNs are systems that are inspired by biological neural networks, such as can be found in a retina or a brain. ANNs comprise a plurality of interconnected nodes and a plurality of connections, so-called edges, between the nodes. There are usually three types of nodes, input nodes that receiving input values, hidden nodes that are (only) connected to other nodes, and output nodes that provide output values. Each node may represent an artificial neuron. Each edge may transmit information, from one node to another.

The output of a node may be defined as a (non-linear) function of its inputs (e.g. of the sum of its inputs). The inputs of a node may be used in the function based on a "weight" of the edge or of the node that provides the input. The weight of nodes and/or of edges may be adjusted in the learning process. In other words, the training of an artificial neural network may comprise adjusting the weights of the nodes and/or edges of the artificial neural network, i.e. to achieve a desired output for a given input.

Alternatively, the machine-learning model may be a support vector machine, a random forest model or a gradient boosting model. Support vector machines (i.e. support vector networks) are supervised learning models with associated learning algorithms that may be used to analyze data (e.g. in classification or regression analysis). Support vector machines may be trained by providing an input with a plurality of training input values that belong to one of two categories.

The support vector machine may be trained to assign a new input value to one of the two categories. Alternatively, the machine-learning model may be a Bayesian network, which is a probabilistic directed acyclic graphical model. A Bayesian network may represent a set of random variables and their conditional dependencies using a directed acyclic graph. Alternatively, the machine-learning model may be based on a genetic algorithm, which is a search algorithm and heuristic technique that mimics the process of natural selection.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

The previous description of the disclosed embodiments are merely examples of possible implementations, which are provided to enable any person skilled in the art to make or use the present invention. Various variations and modifications of these embodiments will be readily apparent to those skilled in the art, and the generic principles defined herein may be applied to other embodiments without departing from the spirit or scope of the present disclosure.

Thus, the present invention is not intended to be limited to the embodiments shown herein but it is to be accorded the widest scope consistent with the principles and novel features disclosed herein. Therefore, the present invention is not to be limited except in accordance with the following claims.

### List of Reference Signs

- 1: clustering threshold value
- 2: ratio of no. of clusters by no. of images
- 3..5: curves
- 10: user
- 61: clustering threshold
- 62: clustering threshold
- 71: image
- 72: image embedding
- 73: cluster
- 77: user input
- 81: anchor images
- 100: computing device
- 110: input interface
- 120: image embedding generating module, IEGM
- 122: machine-learning algorithm
- 130: clustering module, CLUM
- 132: distance calculating module, DICM
- 140: evaluation module, EVAM
- 150: user interface
- 152: data adaptation module
- 154: machine learning model
- 156: visualization module
- 158: display
- 160: training module
- 200: data storage
- 300: machine learning entity
- 400: computer program product
- 450: program code
- 500: data storage medium
- 550: program code
- S10..S120: method steps

## Claims

1. A computing device (100) comprising:
an input interface (110) configured to receive a plurality of images (71) of a medical scene;
an image embeddings generating module, IEGM (120), configured to receive, as its input, the plurality of images (71) and to generate a data array as an image embedding (72) for each image;
a clustering module, CLUM (130), configured to determine, separately for each of a plurality of clustering parameter values, CPV (1), of a clustering parameter, a respective set of clusters (73) within the plurality of images (71) based on the generated image embeddings (72);
an evaluation module, EVAM (140), configured to construct a trajectory (3, 4, 5) in a parameter space, wherein one dimension of the parameter space represents the plurality of clustering parameter values, CPV (1), and another dimension of the parameter space is based on the number of clusters (73) within the set of clusters (73) determined by the clustering module, CLUM (130), when using a respective clustering parameter value, CPV (1), of the plurality of clustering parameter values, CPV (1);
wherein the evaluation module, EVAM (140) is further configured to determine a measure (AUC) of the parameter space between the origin of the parameter space and the trajectory (3, 4, 5); and
a user interface (160) configured to receive a user input (77) and to indicate changes and/or effects of the user (77) input on/in the measure (AUC).

2. The computing device (100) of claim 1,
wherein the clustering parameter is a clustering threshold.

3. The computing device (100) of claim 1 or 2,
wherein the parameter space is two-dimensional, the trajectory (3, 4, 5) is a one-dimensional curve therein, and wherein the measure is an area under the curve (AUC).

4. The computing device (100) of any of claims 1 to 3,
wherein the user interface, UI (160), is configured to receive user input indicating the addition or removal of at least one image (71) to or from the plurality of images (71) received by the input interface (110).

5. The computing device (100) of any of claims 1 to 4,
further comprising a data adaptation module, DAM (152), configured to obtain a desired value of the measure of the parameter space, and to generate an adapted set of images by removing images (71) from the plurality of images (71) received by the input interface (110) and/or by adding images (71) to the plurality of images (71) such that the measure (AUC) of the parameter space determined by the evaluation module, EVAM (140), based on the adapted set of images, lies within a desired tolerance interval around the desired value of the measure (AUC) of the parameter space.

6. The computing device (100) of any of claims 1 to 5,
wherein the user interface, UI (150), is further configured to prompt a user (10) to input the desired value of the measure (AUC) of the parameter space and/or to specify the desired tolerance interval.

7. The computing device (100) of any of claims 5 or 6,
wherein the data adaptation module, DAM (152), is configured to remove images (71)
based on a random number algorithm.

8. The computing device (100) of any of claims 5 to 7,
wherein the data adaptation module, DAM (152), comprises a machine learning module,
MLM (154) and is configured to eliminate images (71) based on an output of the machine learning module, MLM (154).

9. The computing device (100) of any of claims 5 to 8,
further comprising a training module (160) configured to use the adapted set of images for
training a machine learning entity, MLE (300).

10. The computing device (100) of any of claims 1 to 9,
further comprising a visualization module (156) configured to perform a dimensional reduction on the image embeddings generated by the image embeddings generating module, IEGM (120), into a two-dimensional reduced parameter space; wherein the user interface (160) comprises a display (158) configured to indicate positions of images (71) within the two-dimensional reduced parameter space.

11. A computer-implemented method for preparing training data, comprising:
- obtaining (S10) input data comprising a plurality of images (71) of a medical scene;
- generating (S20), for each image (71) of the plurality of images (71), a data array as an image embedding (72) for that image;
- determining (S30), separately for each of a plurality of clustering parameter values, CPV, of a clustering parameter, a respective set of clusters (73) within the plurality of images (71) based on the generated image embeddings (72);
constructing (S40) a trajectory (3, 4, 5) in a parameter space, wherein one dimension of the parameter space represents the plurality of clustering parameter values, CPV (1), and another dimension of the parameter space is based on the number of clusters (73) determined (S30) using a respective clustering parameter value, CPV (1), of the plurality of clustering parameter values, CPV (1);
determining (S50) a measure (AUC) of the parameter space between the origin of the parameter space and the trajectory (3, 4, 5);
receiving (S60) a user input (77); and
indicating (S70) changes and/or effects of the user input (77) in/on the measure (AUC) of the parameter space.

12. The method of claim 11, further comprising:
obtaining (S62) a desired value of the measure (AUC) of the parameter space; and
generating (S80) an adapted set of images by removing images (71) from the plurality of images (71) such that the measure (AUC) determined by the evaluation module, EVAM (140), based on the adapted set of images, lies within a desired tolerance interval around the desired value of the measure.

13. The method of claim 11 or claim 12, further comprising:
performing (S90) a dimensional reduction on the image embeddings generated by the image embeddings generating module, IEGM (120), into a two-dimensional reduced parameter space; and
indicating (S100) positions of images (71) within the two-dimensional reduced parameter space on a display (158).

14. A computer-implemented method for training a machine learning entity (300), comprising generating (S110) an adapted set of images according to the method of claim 12, and using the generated adapted set of images for training (S120) a machine learning entity, MLE (300).

15. A computer program product (400) comprising executable program code (450) configured to, when executed, perform the method of any of claims 11 to 14.
